# EUROPEAN PATENT APPLICATION

(11) **EP 4 389 475 A1**
(43) Date of publication of application: **26.06.2024**
(21) Application number: 22215680.4
(22) Date of filing: 21.12.2022
(51) Int. Cl.: B60H 1/00

(54) **A VEHICULAR SYSTEM AND METHOD FOR CONTROLLING A VEHICLE COMPARTMENT CLIMATE**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: NILSSON, Magnus, 44836 FLODA (SE); LINDBERG NILSSON, Erik, 41747 GÖTEBORG (SE)
(74) Representative: Zacco Sweden AB

(57) **Abstract**

The disclosure relates to a vehicular system (100) and a method for controlling a vehicle compartment climate in order to achieve a comfort experience for the vehicle occupant when the vehicle occupant is leaving the vehicle (1), the system (100) comprises a processing circuitry (102a,102b,102c) configured to determine a first temperature (TEMP1) of the weather outside of the vehicle (1), determine a second temperature (TEMP2) of the vehicle compartment climate inside of the vehicle (1), and in a determination that the first temperature (TEMP1) is lower than the second temperature (TEMP2), adjust the vehicle compartment climate by increasing the temperature inside of the vehicle to a third temperature (TEMP3) that is higher than the second temperature (TEMP2) while approaching a destination location to achieve a boosted vehicle compartment temperature that is offset from the second temperature (TEMP2).

## Description

### Technical field

The present disclosure relates to a vehicular system, method and a computer program product for controlling a vehicle compartment climate.

### Background art

The climate in a vehicle can today can be controlled so that the vehicle occupant can feel comfortable when riding the vehicle. The vehicle occupant can for example manually set a desired temperature, and then the temperature in the vehicle is adjusted accordingly. The climate in the vehicle is then kept at the desired temperature so that the vehicle occupant can enjoy a comfortable ride from one destination to another. Sometimes, e.g. in the winter, when entering the vehicle the vehicle occupant desires to warm up the seat when entering the vehicle. Today it is also possible to e.g. warm up the steering wheel, e.g. if the vehicle occupant has got cold hands when entering the vehicle.

### Summary

The inventors have identified a need to prepare the vehicle occupant for the outside climate when leaving the vehicle at the destination. It is one thing to feel comfortable when riding with the vehicle, but another thing to feel comfortable when leaving the vehicle and entering into the other climate that is outside of the vehicle which is different from the climate that is inside of the vehicle.

According to a first aspect there is provided a vehicular system for controlling a vehicle compartment climate in order to achieve a comfort experience for the vehicle occupant when the vehicle occupant is leaving the vehicle. The system comprises a processing circuitry configured to determine a first temperature of the weather outside of the vehicle, determine a second temperature of the vehicle compartment climate inside of the vehicle, and in a determination that the first temperature is lower than the second temperature, adjust the vehicle compartment climate by increasing the temperature inside of the vehicle to a third temperature that is higher than the second temperature while approaching a destination location to achieve a boosted vehicle compartment temperature that is offset from the second temperature, and in a determination that the first temperature is higher than the second temperature, adjust the vehicle compartment climate by decreasing the temperature inside of the vehicle to a fourth temperature that is lower than the second temperature while approaching the destination location to achieve a boosted vehicle compartment temperature that is offset from the second temperature.

An advantage with this first aspect is that the vehicle occupant becomes prepared to enter into the climate of the weather outside of the vehicle in that the vehicle occupant benefits from being exposed to the boosted vehicle compartment temperature.

According to some embodiments, the processing circuitry is further configured to determine a destination location, and determine an estimated time of arrival at the destination location.

An advantage with this embodiment is that the system can be prepared to adjust the vehicle compartment climate dependent on the time of arrival at the destination location.

According to some embodiments, the processing circuitry is further configured to determine that the vehicle is approaching the destination location.

An advantage with this embodiment is that the vehicular system can be prepared to adjust the vehicle compartment climate dependent on that the vehicle is approaching the destination location.

According to some embodiments, in a determination that the vehicle is determined to arrive at the destination location within a predetermined period of time, adjust the vehicle compartment climate while approaching the destination location during the predetermined period of time to achieve the boosted vehicle compartment temperature after the predetermined period of time when the vehicle is determined to have arrived at the destination location.

An advantage with this embodiment is that the system starts to adjust the vehicle compartment climate when there is a predetermined period of time left to the destination location in order to achieve the boosted vehicle compartment temperature just when the vehicle has arrived at the destination location.

According to some embodiments, in a determination that the vehicle is determined to arrive at the destination location within a predetermined period of time, adjust the vehicle compartment climate while approaching the destination location during the predetermined period of time to achieve the boosted vehicle compartment temperature at a certain point in time before the end of the predetermined period of time.

An advantage with this embodiment is that the system starts to adjust the vehicle compartment climate when there is a predetermined period of time left to the destination location in order to achieve the boosted vehicle compartment temperature some time before the vehicle has arrived at the destination location.

According to some embodiments the predetermined period of time is set via a user interface by user input, or the predetermined period of time is determined by the system in order to achieve the desired boosted vehicle compartment climate within the predetermined period of time.

An advantage with this embodiment is that the system starts to adjust the vehicle compartment climate at a desired time before reaching the destination location, or the system itself determines when the system must start to adjust the vehicle compartment climate in order to achieve the boosted vehicle compartment temperature before the vehicle has arrived at the destination location.

According to some embodiments, wherein adjusting the current vehicle compartment climate to the boosted vehicle compartment temperature is initiated via a user interface by input by a vehicle occupant at any time and/or wherein adjusting the current vehicle compartment climate to the boosted vehicle compartment temperature is terminated via a user interface by input by a vehicle occupant at any time.

An advantage with this embodiment is that the vehicle occupant can take control over the time when to adjust the vehicle compartment climate to achieve the boosted vehicle compartment temperature, and also when to stop adjusting the vehicle compartment climate.

According to a second aspect there is provided a method for controlling the vehicle compartment climate in order to achieve a comfort experience for the vehicle occupant when the vehicle occupant is leaving the vehicle. The method comprising the step of determining a first temperature of the weather outside of the vehicle, the step of determining a second temperature of the vehicle compartment climate inside of the vehicle, and in a determination that the first temperature is lower than the second temperature, adjust the vehicle compartment climate by increasing the temperature inside of the vehicle to a third temperature that is higher than the second temperature while approaching a destination location to achieve a boosted vehicle compartment temperature that is offset from the second temperature, and in a determination that the first temperature is higher than the second temperature, adjust the vehicle compartment climate by decreasing the temperature inside of the vehicle to a fourth temperature that is lower than the second temperature while approaching the destination location to achieve a boosted vehicle compartment temperature that is offset from the second temperature.

An advantage with this second aspect is that the vehicle occupant becomes prepared to enter into the climate of the weather outside of the vehicle in that the vehicle occupant benefits from being exposed to the boosted vehicle compartment temperature.

According to some embodiments, the method further comprises the step of determining a destination location and determining an estimated time of arrival at the destination location.

An advantage with this embodiment is that the system can be prepared to adjust the vehicle compartment climate dependent on the time of arrival at the destination location.

According to some embodiments, the method further comprises the step of determining that the vehicle is approaching the destination location.

An advantage with this embodiment is that the system can be prepared to adjust the vehicle compartment climate dependent on that the vehicle is approaching the destination location.

According to some embodiments, in a determination that the vehicle is determined to arrive at the destination location within a predetermined period of time, adjust the vehicle compartment climate while approaching the destination location to achieve the boosted vehicle compartment temperature at the predetermined period of time when the vehicle is determined to have arrived at the destination location.

An advantage with this embodiment is that the system starts to adjust the vehicle compartment climate when there is a predetermined period of time left to the destination location in order to achieve the boosted vehicle compartment temperature just when the vehicle has arrived at the destination location.

According to some embodiments, in a determination that the vehicle is determined to arrive at the destination location within a predetermined period of time, adjust the vehicle compartment climate while approaching the destination location during the predetermined period of time to achieve the boosted vehicle compartment temperature at a certain point in time before the end of the predetermined period of time.

An advantage with this embodiment is that the system starts to adjust the vehicle compartment climate when there is a predetermined period of time left to the destination location in order to achieve the boosted vehicle compartment temperature some time before the vehicle has arrived at the destination location.

According to some embodiments, wherein the predetermined period of time is set via a user interface by user input or determined by the system in order to achieve the desired boosted vehicle compartment temperature within the predetermined period of time.

An advantage with this embodiment is that the vehicular system starts to adjust the vehicle compartment climate at a desired time before reaching the destination location, or the system itself determines when the system must start to adjust the vehicle compartment climate in order to achieve the boosted vehicle compartment temperature before the vehicle has arrived at the destination location.

According to some embodiments, wherein adjusting the current vehicle compartment climate to the boosted vehicle compartment temperature is initiated via a user interface by input by a vehicle occupant at any time and/or wherein adjusting the current vehicle compartment climate to the boosted vehicle compartment temperature is terminated via a user interface by input by a vehicle occupant at any time.

An advantage with this embodiment is that the vehicle occupant can take control over the time when to adjust the vehicle compartment climate to achieve the boosted vehicle compartment temperature, and also when to stop adjusting the vehicle compartment climate.

According to a third aspect there is provided a computer program product comprising a non-transitory computer readable medium, having thereon a computer program comprising program instructions, the computer program being loadable into a processing circuitry and configured to cause execution of the method when the computer program is run by the processing circuitry.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 illustrates an example vehicular system for controlling a vehicle compartment climate in order to achieve a comfort experience for the vehicle occupant when the vehicle occupant is leaving the vehicle according to an embodiment of the present disclosure.
Figure 2 illustrates an example route of a vehicle 1 travelling to a destination location, and illustrates a starting point of the predetermined period of time t1 before arriving at the destination, and a certain point in time tc before the end of the predetermined period of time.
Figure 3a illustrates a graph when the vehicle compartment climate is adjusted during a predetermined period of time before arriving at the destination location by increasing the temperature inside of the vehicle to a third temperature that is higher than the second temperature while approaching a destination location.
Figure 3b illustrates a graph when the vehicle compartment climate is adjusted during a predetermined period of time before arriving at the destination location by increasing the temperature inside of the vehicle to a third temperature that is higher than the second temperature to achieve a boosted vehicle compartment temperature at a certain point in time before the end of the predetermined period of time.
Figure 4 illustrates a flow chart of the method steps according to the second aspect of the disclosure.
Figure 5 illustrates a computer program product according to the third aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

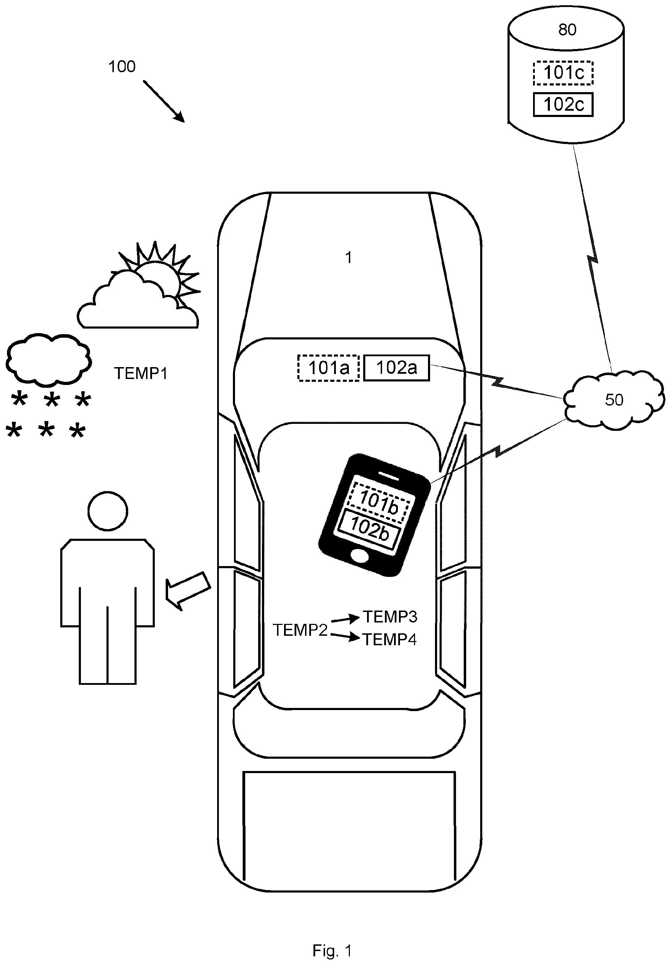

Figure 1 illustrates an example vehicular system for controlling a vehicle compartment climate in order to achieve a comfort experience for the vehicle occupant when the vehicle occupant is leaving the vehicle according to an embodiment of the present disclosure.

The first aspect of this disclosure shows a vehicular system 100 for controlling a vehicle compartment climate in order to achieve a comfort experience for the vehicle occupant when the vehicle occupant is leaving the vehicle 1. In the illustration in Figure 1 the vehicle 1 is a car seen from above, but the vehicle 1 can be any vehicle with a compartment where the vehicle compartment climate can be controlled. In the illustration in Figure 1 a vehicle occupant has just left the vehicle 1 and is facing the weather outside of the vehicle having a first temperature TEMP1.

The system 100 comprises a processing circuitry 102a,102b,102c.

According to some embodiments the processing circuitry 102a is the processing circuitry of an on-board vehicle computer, as illustrated in Figure 1.

According to some embodiments the processing circuitry 102b is comprised in an electronic device connectable to the vehicular system 100 via a wireless communication network 50, as illustrated in Figure 1.

According to some embodiments the processing circuitry 102c is comprised in a remote electronic device 80 connectable to the vehicular system 100 via a wireless communication network 50, as illustrated in Figure 1.

According to some embodiments the vehicular system 100 further comprises a memory 101a,101b,101c configured to store data.

According to some embodiments the memory 101a is the memory of an on-board vehicle computer, as illustrated in Figure 1.

According to some embodiments the memory 101b is comprised in an electronic device connectable to the vehicular system 100 via the wireless communication network 50, as illustrated in Figure 1.

According to some embodiments the memory 101c is comprised in a remote electronic device 80 connectable to the vehicular system 100 via a wireless communication network 50, as illustrated in Figure 1.

According to some embodiments the wireless communication network 50, as illustrated in Figure 1, is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network.

According to some embodiments the wireless communication network 50 is a standardized wireless local area network such as a Wireless Local Area Network, WLAN, Bluetooth^{™}, ZigBee, Ultra-Wideband, Radio Frequency Identification, RFID, or similar network.

According to some embodiments wireless communication network 50 can also be a combination of both a local area network and a wide area network.

According to some embodiments the wireless communication network 50 is defined by common Internet Protocols.

The processing circuitry 102a,102b,102c is configured to determine a first temperature TEMP1 of the weather outside of the vehicle 1, determine a second temperature TEMP2 of the vehicle compartment climate inside of the vehicle 1, and in a determination that the first temperature TEMP1 is lower than the second temperature TEMP2, adjust the vehicle compartment climate by increasing the temperature inside of the vehicle to a third temperature TEMP3 that is higher than the second temperature TEMP2 while approaching a destination location to achieve a boosted vehicle compartment temperature that is offset from the second temperature TEMP2, and in a determination that the first temperature TEMP1 is higher than the second temperature TEMP2, adjust the vehicle compartment climate by decreasing the temperature inside of the vehicle to a fourth temperature TEMP4 that is lower than the second temperature TEMP2 while approaching the destination location to achieve a boosted vehicle compartment temperature that is offset from the second temperature TEMP2.

An advantage with this first aspect is that the vehicle occupant becomes prepared to enter into the climate of the weather outside of the vehicle 1 in that the vehicle occupant benefits from being exposed to the boosted vehicle compartment temperature.

According to some embodiments the processing circuitry 102a, 102b, 102c is configured to obtain historical data of adjustments of the vehicle compartment climate, and determine, by an Artificial Intelligence model, such as a neural network, how to adjust the vehicle compartment climate, based on the first temperature TEMP1 and the historical data, to a boosted vehicle compartment temperature while approaching a destination location.

According to some embodiments the processing circuitry 102a, 102b, 102c is configured to obtain user preference settings how to adjust the vehicle compartment temperature, and adjust the vehicle compartment temperature, based on the first temperature TEMP1 and the user preference settings, to a boosted vehicle compartment climate while approaching a destination location.

In an example the effect of the achieved boosted vehicle compartment climate can be compared with the "sauna effect" in the winter to "heat up", meaning that if someone enters into a sauna for some time just before entering into cold weather, that person will feel comfortable out in the cold weather compared to if not "heated up" by the sauna.

In an example the effect of the achieved boosted vehicle compartment climate can be compared with the "cold bath effect" in the summer to "cool down", meaning that if someone enters into a cold bath for some time just before entering into warm weather, that person will feel comfortable out in the warm weather compared to if not "cooled down" by the cold bath.

According to some embodiments the greater difference between the first temperature TEMP1 of the weather outside of the vehicle 1 and the second temperature TEMP2 of the vehicle compartment climate inside of the vehicle 1, the greater adjustment of the vehicle compartment climate.

According to some embodiments the system 100 further comprises a Heating, Ventilation and Air Conditioning, HVAC, control system configured to regulate at least any of heating, cooling and air conditioning of the vehicle compartment of the vehicle 1. According to some embodiments the processing circuitry 102a,102b,102c is operatively connected to the Heating, Ventilation and Air Conditioning, HVAC, control system.

According to some embodiments the system 100 further comprises a temperature sensor arranged on the outside of the vehicle 1 configured to obtain temperature data to determine the first temperature TEMP1 of the weather outside of the vehicle 1.

According to some embodiments the system 100 further comprises a temperature sensor arranged on the inside of the vehicle 1 configured to obtain temperature data to determine the second temperature TEMP2 of the vehicle compartment climate inside of the vehicle 1.

According to some embodiments the processing circuitry 102a,102b,102c is operatively connected to the Heating, Ventilation and Air Conditioning, HVAC, control system to adjust the vehicle compartment climate by increasing or decreasing the temperature inside of the vehicle 1.

According to some embodiments the system 100 further comprises at least any of a steering wheel heater, a seat heater and an infra-red heater. According to some embodiments the processing circuitry 102a,102b,102c is operatively connected to at least any of the steering wheel heater, the seat heater and the infra-red heater to adjust the vehicle compartment climate by heating the vehicle occupant at or in the proximity of the steering wheel, the seat and the infra-red heater.

According to some embodiments the processing circuitry 102a,102b,102c is further configured to determine a destination location, and determine an estimated time of arrival at the destination location.

An advantage with this embodiment is that the vehicular system can be prepared to adjust the vehicle compartment climate dependent on the time of arrival at the destination location.

According to some embodiments the system 100 further comprises a position sensor configured to obtain positioning data to determine the geographical position of the vehicle 1.

According to some embodiments the system 100 is further configured to obtain temperature data from a remote server via the communication network 50 based on the geographical position of the vehicle 1.

According to some embodiments the system 100 is further configured to obtain temperature data from a remote server via the communication network 50 based on the geographical position of the vehicle 1 to determine the first temperature TEMP1 of the weather outside of the vehicle 1.

According to some embodiments the system 100 is further configured to obtain temperature data from a remote server via the communication network 50 based on the geographical position of a destination location to determine the first temperature TEMP1 of the weather outside of the vehicle 1 at the destination location.

According to some embodiments the system 100 is further configured to obtain temperature data from a remote server via the communication network 50 based on the geographical position of a destination location to determine the first temperature TEMP1 of the weather outside of the vehicle 1 at the destination location at the estimated time of arrival at the destination location.

According to some embodiments the system 100 further comprises a vehicle navigation information system operatively connected to the processing circuitry 102a, 102b, 102c configured for determining a route to a destination location and the estimated time of arrival at the destination location. According to some embodiments the destination location is determined based on position data obtained from a vehicle navigation information system.

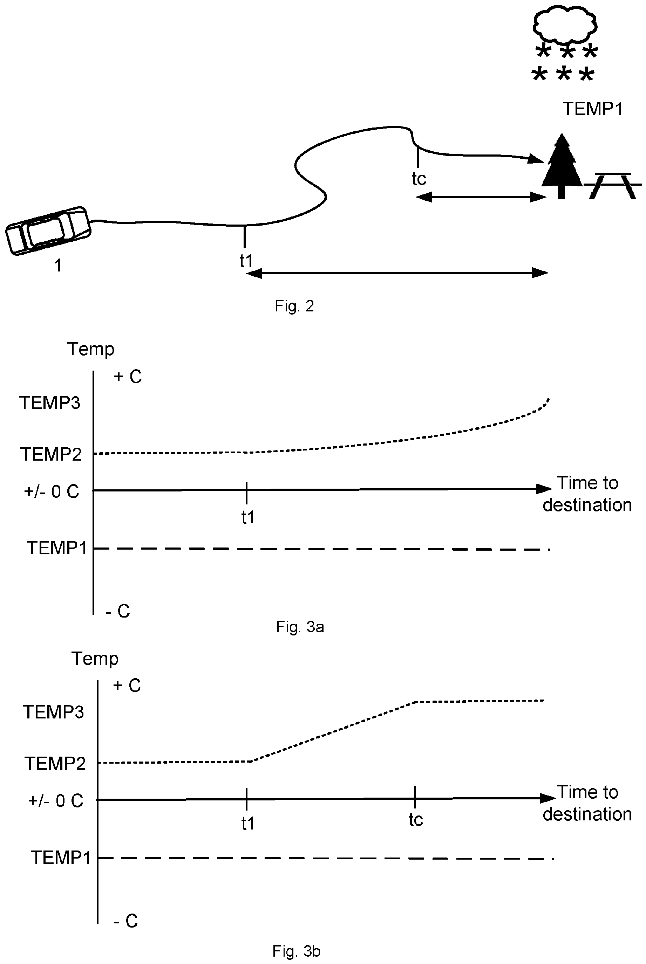

Figure 2 illustrates an example route of a vehicle travelling to a destination location.

According to some embodiments the processing circuitry 102a,102b,102c is further configured to determine that the vehicle 1 is approaching the destination location.

An advantage with this embodiment is that the system 100 can be prepared to adjust the vehicle compartment climate dependent on that the vehicle 1 is approaching the destination location.

According to some embodiments, in a determination that the vehicle 1 is determined to arrive at the destination location within a predetermined period of time t1, adjust the vehicle compartment climate while approaching the destination location during the predetermined period of time t1 to achieve the boosted vehicle compartment temperature after the predetermined period of time t1 when the vehicle 1 is determined to have arrived at the destination location.

An advantage with this embodiment is that the system 100 starts to adjust the vehicle compartment climate when there is a predetermined period of time left to the destination location in order to achieve the boosted vehicle compartment temperature just when the vehicle 1 has arrived at the destination location.

Figure 2 illustrates an example route of a vehicle 1 travelling to a destination location, and illustrates a starting point of the predetermined period of time t1 before arriving at the destination.

Figure 3a illustrates a graph when the vehicle compartment climate is adjusted during the predetermined period of time t1 before arriving at the destination location by increasing the temperature inside of the vehicle 1 to a third temperature TEMP3 that is higher than the second temperature TEMP2 while approaching the destination location. In the example graph of Figure 3a the vehicle compartment climate adjusted slowly in the beginning of the predetermined time t1 before arriving at the destination, and at the end of the predetermined time t1 before arriving at the destination, i.e. just before arriving at the destination, exponentially increased to achieve the boosted vehicle compartment temperature that is offset from the second temperature TEMP2 when the vehicle 1 is determined to have arrived at the destination location.

According to some embodiments in a determination that the vehicle 1 is determined to arrive at the destination location within a predetermined period of time t1, adjust the vehicle compartment climate while approaching the destination location during the predetermined period of time t1 to achieve the boosted vehicle compartment temperature at a certain point in time tc before the end of the predetermined period of time t1.

An advantage with this embodiment is that the system 100 starts to adjust the vehicle compartment climate when there is a predetermined period of time t1 left to the destination location in order to achieve the boosted vehicle compartment temperature some time tc before the vehicle 1 has arrived at the destination location.

Figure 2 illustrates an example route of a vehicle 1 travelling to a destination location, and illustrates the starting point of the predetermined period of time t1 before arriving at the destination, and the certain point in time tc before the end of the predetermined period of time.

According to some embodiments the certain point in time tc before the end of the predetermined period of time t1 is defined by the remaining time before the end of the predetermined period of time t1. According to some embodiments the certain point in time tc before the end of the predetermined period of time t1 is a predefined time that is independent of the predetermined period of time t1. In an example the certain point in time tc before the end of the predetermined period of time t1 is always 3 minutes so that the vehicle occupant is exposed to the boosted vehicle compartment temperature at least during 3 minutes before leaving the vehicle 1.

According to some embodiments the certain point in time tc before the end of the predetermined period of time t1 is further defined by an estimated time period the vehicle occupant is to be exposed to the first temperature TEMP1 of the weather outside of the vehicle 1. In an example, in the case the vehicle occupant is travelling to the office, the time period the vehicle occupant is to be exposed to the first temperature TEMP1 can be estimated by the vehicle occupant, e.g. 3 minutes. According to some embodiments the estimated time period the vehicle occupant is to be exposed to the first temperature TEMP1 defines the certain point in time tc.

According to some embodiments estimated time period the vehicle occupant is to be exposed to the first temperature TEMP1 of the weather outside of the vehicle 1 is set via a user interface by user input, or the estimated time period the vehicle occupant is to be exposed to the first temperature TEMP1 of the weather outside of the vehicle 1 is determined by the system.

According to some embodiments the certain point in time tc before the end of the predetermined period of time t1 is defined by a predefined percentage of time of the remaining time before the end of the predetermined period of time t1. In an example the predetermined period of time t1 is 15 minutes and the certain point in time tc before the end of the predetermined period of time t1 is 3 minutes because it is 20% of time of the remaining time before the end of the predetermined period of time t1.

According to some embodiments, in a determination that the vehicle 1 is determined to arrive at the destination location within a predetermined period of time t1, adjust the vehicle compartment climate while approaching the destination location during the predetermined period of time t1 to achieve the boosted vehicle compartment temperature as soon as possible within the predetermined period of time t1. In an example the vehicle occupant desires to maximize the time to be exposed to the boosted vehicle compartment temperature and the adjustment of the vehicle compartment climate is maximized in order to achieve the boosted vehicle compartment temperature as soon as possible during the predetermined period of time t1.

According to some embodiments the predetermined period of time t1 is set via a user interface by user input, or the predetermined period of time t1 is determined by the system in order to achieve the desired boosted vehicle compartment climate within the predetermined period of time t1.

An advantage with this embodiment is that the vehicular system starts to adjust the vehicle compartment climate at a desired time before reaching the destination location, or the system itself determines when the system must start to adjust the vehicle compartment climate in order to achieve the boosted vehicle compartment temperature before the vehicle has arrived at the destination location.

In one example, the vehicle occupant desires to only have the adjustment of the vehicle compartment climate during the last 5 minutes of the ride and sets the predetermined period of time t1 via a user interface.

According to some embodiments the predetermined period of time t1 is determined by the system by determining the temperature difference between the first temperature TEMP1 of the weather outside of the vehicle 1 and the second temperature TEMP2 of the vehicle compartment climate inside of the vehicle 1. In an example, dependent on the capacity of the a Heating, Ventilation and Air Conditioning, HVAC, control system of the vehicle 1, the temperature difference between the first temperature TEMP1 of the weather outside of the vehicle 1 and the second temperature TEMP2 of the vehicle compartment climate inside of the vehicle 1 defines the predetermined period of time t1 in order to achieve the desired boosted vehicle compartment climate within the predetermined period of time t1.

According to some embodiments wherein adjusting the current vehicle compartment climate to the boosted vehicle compartment temperature is initiated via a user interface by input by a vehicle occupant at any time and/or wherein adjusting the current vehicle compartment climate to the boosted vehicle compartment temperature is terminated via a user interface by input by a vehicle occupant at any time.

An advantage with this embodiment is that the vehicle occupant can take control over the time when to adjust the vehicle compartment climate to achieve the boosted vehicle compartment temperature, and also when to stop adjusting the vehicle compartment climate.

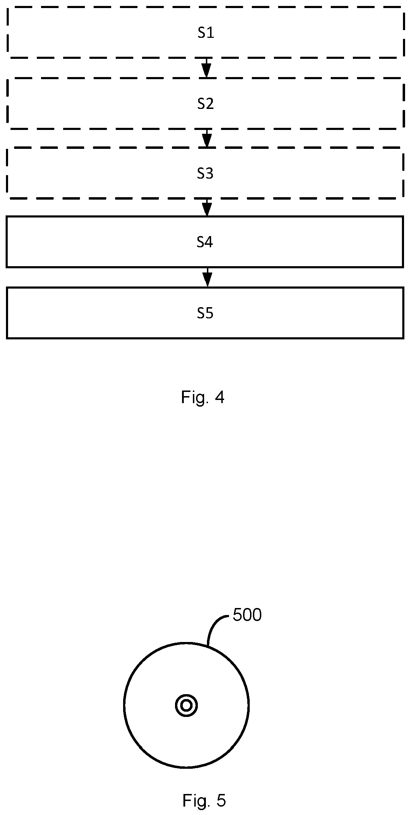

Figure 4 illustrates a flow chart of method steps according to the second aspect of the disclosure.

The second aspect of this disclosure shows a method for controlling the vehicle compartment climate in order to achieve a comfort experience for the vehicle occupant when the vehicle occupant is leaving the vehicle 1, the method comprising the step of S3 determining a first temperature TEMP1 of the weather outside of the vehicle 1, the step of S4 determining a second temperature TEMP2 of the vehicle compartment climate inside of the vehicle 1, and in a determination that the first temperature TEMP1 is lower than the second temperature TEMP2, adjust the vehicle compartment climate by increasing the temperature inside of the vehicle 1 to a third temperature TEMP3 that is higher than the second temperature TEMP2 while approaching a destination location to achieve a boosted vehicle compartment temperature that is offset from the second temperature TEMP2, and in a determination that the first temperature TEMP1 is higher than the second temperature TEMP2, adjust the vehicle compartment climate by decreasing the temperature inside of the vehicle 1 to a fourth temperature TEMP4 that is lower than the second temperature TEMP2 while approaching the destination location to achieve a boosted vehicle compartment temperature that is offset from the second temperature TEMP2.

An advantage with this second aspect is that the vehicle occupant becomes prepared to enter into the climate of the weather outside of the vehicle 1 in that the vehicle occupant benefits from being exposed to the boosted vehicle compartment temperature.

According to some embodiments the method further comprises the step of S1 determining a destination location, and the step of S2 determining an estimated time of arrival at the destination location.

An advantage with this embodiment is that the system 100 can be prepared to adjust the vehicle compartment climate dependent on the time of arrival at the destination location.

According to some embodiments the method further comprises the step of S5 determining that the vehicle 1 is approaching the destination location.

An advantage with this embodiment is that the system can 100 be prepared to adjust the vehicle compartment climate dependent on that the vehicle is approaching the destination location.

According to some embodiments in a determination that the vehicle 1 is determined to arrive at the destination location within a predetermined period of time t1, adjust the vehicle compartment climate while approaching the destination location to achieve the boosted vehicle compartment temperature at the predetermined period of time t1 when the vehicle 1 is determined to have arrived at the destination location.

An advantage with this embodiment is that the system 100 starts to adjust the vehicle compartment climate when there is a predetermined period of time left to the destination location in order to achieve the boosted vehicle compartment temperature just when the vehicle has arrived at the destination location.

According to some embodiments in a determination that the vehicle 1 is determined to arrive at the destination location within a predetermined period of time t1, adjust the vehicle compartment climate while approaching the destination location during the predetermined period of time t1 to achieve the boosted vehicle compartment temperature at a certain point in time tc before the end of the predetermined period of time t1.

An advantage with this embodiment is that the system starts to adjust the vehicle compartment climate when there is a predetermined period of time left to the destination location in order to achieve the boosted vehicle compartment temperature some time before the vehicle has arrived at the destination location.

According to some embodiments the predetermined period of time t1 is set via a user interface by user input or determined by the system in order to achieve the desired boosted vehicle compartment temperature within the predetermined period of time t1.

An advantage with this embodiment is that the vehicular system starts to adjust the vehicle compartment climate at a desired time before reaching the destination location, or the system itself determines when the system must start to adjust the vehicle compartment climate in order to achieve the boosted vehicle compartment temperature before the vehicle has arrived at the destination location.

According to some embodiments adjusting the current vehicle compartment climate to the boosted vehicle compartment temperature is initiated via a user interface by input by a vehicle occupant at any time and/or wherein adjusting the current vehicle compartment climate to the boosted vehicle compartment temperature is terminated via a user interface by input by a vehicle occupant at any time.

An advantage with this embodiment is that the vehicle occupant can take control over the time when to adjust the vehicle compartment climate to achieve the boosted vehicle compartment temperature, and also when to stop adjusting the vehicle compartment climate.

The third aspect of this disclosure shows a computer program product for the second aspect comprising a non-transitory computer readable medium, having thereon a computer program comprising program instructions, the computer program being loadable into a processing circuitry 102a,102b,102c and configured to cause execution of the method when the computer program is run by the processing circuitry 102a,102b,102c.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A vehicular system (100) for controlling a vehicle compartment climate in order to achieve a comfort experience for the vehicle occupant when the vehicle occupant is leaving the vehicle (1), the system (100) comprises:
a processing circuitry (102a,102b,102c) configured to:
- determine a first temperature (TEMP1) of the weather outside of the vehicle (1);
- determine a second temperature (TEMP2) of the vehicle compartment climate inside of the vehicle (1); and
- in a determination that the first temperature (TEMP1) is lower than the second temperature (TEMP2), adjust the vehicle compartment climate by increasing the temperature inside of the vehicle to a third temperature (TEMP3) that is higher than the second temperature (TEMP2) while approaching a destination location to achieve a boosted vehicle compartment temperature that is offset from the second temperature (TEMP2); and in a determination that the first temperature (TEMP1) is higher than the second temperature (TEMP2), adjust the vehicle compartment climate by decreasing the temperature inside of the vehicle to a fourth temperature (TEMP4) that is lower than the second temperature (TEMP2) while approaching the destination location to achieve a boosted vehicle compartment temperature that is offset from the second temperature (TEMP2).

2. The system (100) according to according to claim 1, wherein the processing circuitry (102a,102b,102c) is further configured to:
- determine a destination location; and determine an estimated time of arrival at the destination location.

3. The system (100) according to claim 2, wherein the processing circuitry (102a,102b,102c) is further configured to:
- determine that the vehicle (1) is approaching the destination location.

4. The system (100) according to claim 3, wherein in a determination that the vehicle (1) is determined to arrive at the destination location within a predetermined period of time (t1), adjust the vehicle compartment climate while approaching the destination location during the predetermined period of time (t1) to achieve the boosted vehicle compartment temperature after the predetermined period of time (t1) when the vehicle (1) is determined to have arrived at the destination location.

5. The system (100) according to claim 3, wherein in a determination that the vehicle (1) is determined to arrive at the destination location within a predetermined period of time (t1), adjust the vehicle compartment climate while approaching the destination location during the predetermined period of time (t1) to achieve the boosted vehicle compartment temperature at a certain point in time (tc) before the end of the predetermined period of time (t1)

6. The system according to any of the claims 4 and 5 wherein the predetermined period of time (t1) is set via a user interface by user input, or the predetermined period of time (t1) is determined by the system in order to achieve the desired boosted vehicle compartment climate within the predetermined period of time (t1).

7. The system according to any of the preceding claims wherein adjusting the current vehicle compartment climate to the boosted vehicle compartment temperature is initiated via a user interface by input by a vehicle occupant at any time and/or wherein adjusting the current vehicle compartment climate to the boosted vehicle compartment temperature is terminated via a user interface by input by a vehicle occupant at any time.

8. A method for controlling the vehicle compartment climate in order to achieve a comfort experience for the vehicle occupant when the vehicle occupant is leaving the vehicle (1), the method comprising:
- (S3) determining a first temperature (TEMP1) of the weather outside of the vehicle (1);
- (S4) determining a second temperature (TEMP2) of the vehicle compartment climate inside of the vehicle (1); and
- in a determination that the first temperature (TEMP1) is lower than the second temperature (TEMP2), adjust the vehicle compartment climate by increasing the temperature inside of the vehicle (1) to a third temperature (TEMP3) that is higher than the second temperature (TEMP2) while approaching a destination location to achieve a boosted vehicle compartment temperature that is offset from the second temperature (TEMP2); and in a determination that the first temperature (TEMP1) is higher than the second temperature (TEMP2), adjust the vehicle compartment climate by decreasing the temperature inside of the vehicle (1) to a fourth temperature (TEMP4) that is lower than the second temperature (TEMP2) while approaching the destination location to achieve a boosted vehicle compartment temperature that is offset from the second temperature (TEMP2).

9. The method according to claim 8 further comprising:
- (S1) determining a destination location; and
- (S2) determining an estimated time of arrival at the destination location.

10. The method according to claim 9 further comprising:
- (S5) determining that the vehicle (1) is approaching the destination location.

11. The method according claim 10, wherein in a determination that the vehicle (1) is determined to arrive at the destination location within a predetermined period of time (t1), adjust the vehicle compartment climate while approaching the destination location to achieve the boosted vehicle compartment temperature at the predetermined period of time (t1) when the vehicle (1) is determined to have arrived at the destination location.

12. The method according claim 10, wherein in a determination that the vehicle (1) is determined to arrive at the destination location within a predetermined period of time (t1), adjust the vehicle compartment climate while approaching the destination location during the predetermined period of time (t1) to achieve the boosted vehicle compartment temperature at a certain point in time (tc) before the end of the predetermined period of time (t1).

13. The method according to any of the claims 11-12 wherein the predetermined period of time (t1) is set via a user interface by user input or determined by the system in order to achieve the desired boosted vehicle compartment temperature within the predetermined period of time (t1).

14. The method according to any of the claims 8-13 wherein adjusting the current vehicle compartment climate to the boosted vehicle compartment temperature is initiated via a user interface by input by a vehicle occupant at any time and/or wherein adjusting the current vehicle compartment climate to the boosted vehicle compartment temperature is terminated via a user interface by input by a vehicle occupant at any time.

15. A computer program product (500) comprising a non-transitory computer readable medium, having thereon a computer program comprising program instructions, the computer program being loadable into a processing circuitry (102a,102b,102c) and configured to cause execution of the method according to any of claims 8 through 14 when the computer program is run by the processing circuitry (102a,102b,102c).
